# FASCICULE DE BREVET EUROPEEN

(11) **EP 3 571 064 B1**
(45) Date de publication et mention de la délivrance du brevet: **21.10.2020**
(21) Numéro de dépôt: 17822368.1
(22) Date de dépôt: 01.12.2017
(51) Int. Cl.: B60C 13/00, B60C 1/00

(54) **FLANC DE PNEUMATIQUE POUR VEHICULE LOURD DE TYPE GENIE CIVIL**
REIFENSEITENWAND FÜR EIN SCHWERLASTFAHRZEUG FÜR DEN TIEFBAU
TYRE SIDEWALL FOR A HEAVY DUTY CIVIL ENGINEERING VEHICLE

(30) Priorité: 20.01.2017 FR 1750462
(43) Date de publication de la demande: 27.11.2019
(73) Titulaire: Compagnie Générale des Etablissements Michelin, 63000 Clermont-Ferrand (FR)
(72) Inventeur: LEMARCHAND, Christophe, 63040 Clermont-Ferrand Cedex 9 (FR); ROYER, Thierry, 63040 Clermont-Ferrand Cedex 9 (FR); BELIN, Cécile, 63040 Clermont-Ferrand Cedex 9 (FR); ROUSSEL, Cécile, 63040 Clermont-Ferrand Cedex 9 (FR)
(74) Mandataire: Millanvois, Patrick Jacques Jean
(86) Numéro de dépôt international: PCT/FR2017/053346
(87) Numéro de publication internationale: WO 2018/134488

(56) Documents cités:
- JP-A- 2007 045 361
- JP-A- 2007 182 100
- US-A1- 2007 151 649

## Description

La présente invention concerne un pneumatique radial, destiné à équiper un véhicule lourd de type génie civil et, plus particulièrement, les flancs d'un tel pneumatique.

Un pneumatique radial pour véhicule lourd de type génie civil est destiné à être monté sur une jante dont le diamètre est au moins égal à 25 pouces, selon la norme de la European Tyre and Rim Technical Organisation ou ETRTO. Il équipe usuellement un véhicule lourd, destiné à porter des charges élevées et à rouler sur des sols agressifs, tels que des pistes recouvertes de pierres.

De façon générale, un pneumatique ayant une géométrie de révolution par rapport à un axe de rotation, sa géométrie est décrite dans un plan méridien contenant son axe de rotation. Pour un plan méridien donné, les directions radiale, axiale et circonférentielle désignent respectivement les directions perpendiculaire à l'axe de rotation, parallèle à l'axe de rotation et perpendiculaire au plan méridien.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

Un pneumatique comprend une bande de roulement, destinée à venir en contact avec un sol, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de sommet d'un pneumatique radial comprend une superposition de couches de sommet s'étendant circonférentiellement, radialement à l'extérieur de l'armature de carcasse. Chaque couche de sommet est constituée de renforts le plus souvent métalliques, parallèles entre eux et enrobés par un matériau polymérique de type élastomère ou mélange élastomérique.

L'armature de carcasse d'un pneumatique radial comprend habituellement au moins une couche de carcasse comprenant des renforts le plus souvent métalliques, enrobés par un mélange élastomérique. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

Un flanc de pneumatique comprend au moins une couche de flanc constituée par un mélange élastomérique et s'étendant axialement vers l'intérieur du pneumatique à partir d'une face extérieure du pneumatique, en contact avec l'air atmosphérique. Au moins dans la zone de plus grande largeur axiale du pneumatique, le flanc s'étend axialement vers l'intérieur jusqu'à une couche de carcasse, axialement la plus extérieure de l'armature de carcasse.

Par mélange élastomérique, on entend un matériau élastomérique obtenu par mélangeage de ses divers constituants. Un mélange élastomérique comprend classiquement une matrice élastomérique comprenant au moins un élastomère diénique de type caoutchouc naturel ou synthétique, au moins une charge renforçante de type noir de carbone et/ou de type silice, un système de réticulation le plus souvent à base de soufre, et des agents de protection.

Un mélange élastomérique peut être caractérisé mécaniquement, en particulier après cuisson, par ses propriétés dynamiques, telles qu'un module de cisaillement dynamique G*= (G'²+G"²)^{1/2}, où G' est le module de cisaillement élastique et G" le module de cisaillement visqueux, et une perte dynamique tgδ=G"/G'. Le module de cisaillement dynamique G* et la perte dynamique tgδ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C.

Vis-à-vis de la fissuration, un mélange élastomérique peut être caractérisé, en statique, par un test de traction uniaxiale, sur une éprouvette normalisée, permettant de déterminer son allongement à rupture, ainsi que sa contrainte à rupture, à une température donnée, par exemple à 60°C.

Un mélange élastomérique peut être en outre caractérisé vis-à-vis de sa tenue à la fissuration, par un test de fatigue. La résistance à la fatigue N_{R}, exprimée en nombre de cycles ou en unité relative, est mesurée de manière connue sur 12 éprouvettes soumises à des tractions répétées de faible fréquence jusqu'à un allongement de 75%, à une température de 23°C, à l'aide d'un appareil Monsanto (type « MFTR ») jusqu'à rupture de l'éprouvette, selon les normes ASTM D4482-85 et ISO 6943. Dans le cas de résultats exprimés en unité relative, une valeur supérieure à celle d'un témoin pris en référence, arbitrairement fixée à 100, indique un résultat amélioré c'est-à-dire une meilleure résistance à la fatigue des échantillons de mélange élastomérique. Corrélativement, une valeur inférieure à 100 indique un résultat dégradé c'est-à-dire une moins bonne résistance à la fatigue des échantillons de mélange élastomérique.

Un mélange élastomérique peut également être caractérisé, vis-à-vis de sa tenue à la fissuration, par la vitesse de propagation d'une fissure dans ledit mélange élastomérique ou vitesse de fissuration, pour un taux de restitution d'énergie élastique donnée.

Le taux de restitution d'énergie élastique est l'énergie dissipée par unité de surface créée par la fissure quand elle se propage. Elle est exprimée en joules par mètre au carré. On sépare généralement le processus de fissuration des élastomères en deux phases : une première phase pendant laquelle une fissure s'amorce, puis une seconde phase pendant laquelle elle se propage. Dans le cadre de l'invention, les inventeurs se sont focalisés sur la phase de propagation des fissures dans les mélanges élastomériques, en étudiant les relations entre le taux de restitution d'énergie, la vitesse de propagation des fissures, et la composition des mélanges élastomériques.

La vitesse de fissuration peut être mesurée sur des éprouvettes de mélanges élastomériques, à l'aide d'une machine de fatigue cyclique (« Elastomer Test System ») du type 381, de la société MTS, comme expliqué ci-après. La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur comprise entre 130 et 170 mm et de largeur comprise entre 10 et 15 mm, les deux bords latéraux étant chacun recouverts dans le sens de la longueur par un bourrelet de caoutchouc cylindrique (diamètre 5 mm) permettant l'ancrage dans les mors de la machine de traction. Les éprouvettes ainsi préparées sont testées après un vieillissement de 30 jours à 80°C sous azote. Le test est réalisé en ambiance atmosphérique, à une température de 80 °C. Après accommodation, 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur inférieure ou égale à environ 900 J/m². La vitesse de propagation de la fissure est la dérivée de la longueur fissurée par rapport au nombre de cycles. Elle est mesurée en nanomètres par cycle. Pour des commodités de lecture, elle est souvent exprimée en unités relatives (u.r.) en divisant la vitesse de propagation de la fissure dans le mélange élastomérique témoin par celle dans le mélange élastomérique testé, les vitesses de propagation de la fissure étant mesurées pour un même taux de restitution d'énergie.

Concernant le mécanisme de fissuration, l'homme du métier a pu observer les grandes étapes de la propagation d'une fissure sur une éprouvette pré-entaillée soumise à un test de traction uniaxiale à vitesse d'étirement constante. Tout d'abord, la fissure s'ouvre sans se propager, jusqu'à obtenir un rayon de fond d'entaille millimétrique. Puis l'entaille bifurque et se propage non pas dans la direction perpendiculaire à la traction, mais suivant la direction de traction, sur quelques millimètres, avec une vitesse de propagation lente (de l'ordre de quelques mm/s), avant de s'arrêter. C'est ce phénomène qui est appelé rotation de fissure. La fissure se réamorce ensuite en fond d'entaille et peut alors bifurquer de nouveau et se propager de la même manière. Les rotations se produisent sur les deux bords de l'entaille et de manière relativement symétrique.

L'usage d'un pneumatique pour véhicule lourd de type génie civil est caractérisé par un port de charges élevées et un roulage sur des pistes recouvertes de pierres de diverses tailles. Au cours du roulage du véhicule, le pneumatique, monté sur sa jante, gonflé et écrasé sous la charge du véhicule, est soumis à des cycles de flexion, en particulier au niveau de ses flancs. Les cycles de flexion entraînent des contraintes et déformations principalement de cisaillement et de compression, dans les flancs qui se déforment selon de faibles rayons de courbure. Au cours du temps, les cycles de flexion sont susceptibles d'initier sur la face extérieure des flancs des fissures. Les fissures peuvent également être initiées par des agressions mécaniques extérieures compte tenu de l'environnement de roulage agressif du pneumatique.

Ces fissures peuvent se propager à la fois en surface et radialement vers l'intérieur. La propagation des fissures en surface peuvent donner un aspect esthétique dégradé auquel l'utilisateur peut être sensible. La propagation des fissures radialement vers l'intérieur, à travers le flanc, peut atteindre l'armature de carcasse et déboucher sur la paroi intérieure du pneumatique, en générant une perte de pression rapide du pneumatique. Cette perte de pression nécessite alors le remplacement du pneumatique.

Compte tenu de l'augmentation de la productivité dans les mines, par la vitesse de transport ou par la charge transportée, les pneumatiques de véhicule de génie civil sont soumis à des sollicitations mécaniques de plus en plus élevées, ce qui les sensibilise encore plus à la propagation des fissures dans les flancs, susceptibles de conduire à un état esthétique dégradé et à une perte de pression rapide dans des cas extrêmes.

Les inventeurs se sont donnés pour objectif de maîtriser la direction de la propagation des fissures des flancs du pneumatique, en les orientant vers l'intérieur, sans pour autant traverser l'armature de carcasse qui conduirait à une mise à plat du pneumatique. Cette approche présente l'avantage de préserver l'aspect extérieur des flancs en évitant les arrachements de matière consécutifs à la fissuration.

Cet objectif a été atteint par un pneumatique pour véhicule lourd de type génie civil comprenant :
- deux flancs reliant une bande de roulement à deux bourrelets,
- chaque flanc consistant en un stratifié comprenant au moins une première et une deuxième couches de flanc axialement superposées et ayant une épaisseur totale E,
- la première couche de flanc, la plus axialement extérieure, ayant une épaisseur E1 et étant constituée d'un premier mélange élastomérique M1,
- le premier mélange élastomérique M1 ayant un module de cisaillement dynamique élastique G'1, un module de cisaillement visqueux G"1, une perte dynamique tgδ1, une résistance à la fissuration en fatigue caractérisée par un nombre de cycles à rupture NR1et une aptitude à la propagation de fissure caractérisée par une vitesse de propagation de fissure VP1,
- la deuxième couche de flanc, la plus axialement intérieure, ayant une épaisseur E2 et étant constituée d'un deuxième mélange élastomérique M2,
- le deuxième mélange élastomérique M2 ayant un module de cisaillement dynamique élastique G'2, un module de cisaillement visqueux G"2, une perte dynamique tgδ2, une résistance à la fissuration en fatigue caractérisée par un nombre de cycles à rupture NR2 et une aptitude à la propagation de fissure caractérisée par une vitesse de propagation de fissure VP2,
- l'épaisseur E1 de la première couche de flanc axialement extérieure étant au plus égale à 0.9 fois l'épaisseur totale E du stratifié,
- l'épaisseur E2 de la deuxième couche de flanc axialement intérieure étant au moins égale à la valeur minimale entre 3 mm et 0.1 fois l'épaisseur totale E du stratifié,
- le premier mélange élastomérique M1 ayant un nombre de cycles à rupture NR1 au moins égal à 150000 cycles,
- le deuxième mélange élastomérique M2 a un nombre de cycles à rupture NR2 au moins égal à 300000 cycles
- et le rapport VP1/ VP2 des vitesses de propagation de fissure respectives des premier et deuxième mélanges élastomériques (M1, M2) étant au moins égal à 1.25.

L'idée essentielle de l'invention est d'avoir une première couche de flanc, la plus axialement extérieure, au contact de l'air atmosphérique, ayant une relativement forte épaisseur E1 au plus égale à 0.9 fois l'épaisseur totale E du stratifié, dans laquelle la vitesse de propagation de fissure VP1 est relativement élevée, et une deuxième couche de flanc, la plus axialement intérieure, au contact de l'armature de carcasse, ayant une relativement faible épaisseur E2 au plus égale à 0.1 fois l'épaisseur totale E du stratifié, dans laquelle la vitesse de propagation de fissure VP2 est relativement faible.

La répartition des deux couches de flanc est réalisée de manière à ce que la couche de flanc qui a la plus faible hystérèse, caractérisée par le module cisaillement visqueux G", a l'épaisseur la plus forte et est positionnée du côté extérieur du pneumatique, tout en conservant une épaisseur minimale de 3 mm pour la deuxième couche de flanc interne.

Il est à noter que préférentiellement le flanc est constitué par un stratifié comprenant uniquement deux couches de flanc, mais qu'un stratifié de plus de deux couches est également envisageable. Les mécanismes divulgués dans le présent document sont toutefois décrits dans le cas d'un stratifié à deux couches.

En d'autres termes, le mélange élastomérique de la première couche de flanc axialement extérieure est conçu pour avoir une résistance à la propagation de fissure inférieure à celle du mélange élastomérique de la deuxième couche de flanc axialement intérieure. Ainsi, une fissure initiée sur la face axialement extérieure de la première couche de flanc se propage rapidement, dans l'épaisseur du flanc, axialement vers l'intérieur du pneumatique, et non à la surface extérieure du flanc de pneumatique. Lorsque cette fissure arrive au voisinage de la deuxième couche de flanc axialement intérieure, la fissure se propage plus lentement avec une ou plusieurs rotations de sa direction de propagation : ainsi la fissuration est ralentie et ne se propage plus axialement vers l'intérieur en direction de l'armature de carcasse, ce qui évite une fissuration de l'armature de carcasse pouvant alors entraîner une perte de pression lente ou rapide du pneumatique. Les inventeurs ont montré qu'un rapport VP1/ VP2 des vitesses de propagation de fissure respectives des premier et deuxième mélanges élastomériques (M1, M2) au moins égal à 1.25 garantissait un effet significatif de l'invention.

Ainsi, cette conception bi-couche de flanc permet avantageusement à la fois de limiter la fissuration du flanc en surface, à l'origine d'un problème d'aspect du flanc, et d'éviter une fissuration susceptible d'atteindre l'armature de carcasse, à l'origine de de perte d'étanchéité.

Il est à noter que les propriétés dynamiques des premier et deuxième mélanges élastomériques (M1, M2), c'est-à-dire les modules de cisaillement dynamiques élastiques (G'1, G'2), les modules de cisaillement visqueux (G'1, G"2) et les pertes dynamiques (tgδ₁, tgδ₂) sont mesurés à une fréquence de 10 Hz et à une température de 60°C. De plus, les vitesses de propagation de fissure (VP1, VP2) sont exprimées en nanomètres par cycle et sont mesurées à 80°C pour un taux de restitution d'énergie égal à 900 J/m².

Avantageusement les modules de cisaillement dynamiques élastiques (G'1, G'2) des premier et deuxième mélanges élastomériques (M1, M2) sont sensiblement égaux, ce qui signifie que leurs valeurs respectives diffèrent d'au plus 6%. Ceci permet d'éviter des différentiels de déformations élastiques entre les première et deuxième couches de flanc et donc un meilleur comportement mécanique du stratifié.

Encore avantageusement le rapport des modules de cisaillement visqueux G"1/G"2 respectivement des mélanges (M1, M2) est au plus égal à 0.55.

Il est connu que le flanc du pneumatique fonctionne mécaniquement à déformations imposées dans la zone d'initiation des fissures. Il en résulte que le comportement thermique du flanc est piloté par les modules de cisaillement visqueux G"₁ et G"₂ des deux mélanges élastomériques respectifs des première et deuxième couches de flanc. Les inventeurs ont pu montrer que le comportement thermique du flanc était satisfaisant, typiquement avec une température moyenne de fonctionnement ne dépassant pas 70°C, lorsque la condition sur le rapport des modules de cisaillement visqueux G"1/G"2 respectivement des mélanges (M1, M2) était satisfaite, sachant que la première couche de flanc a le module de cisaillement visqueux G"1 le plus bas est celle qui l'épaisseur E1 la plus élevée.

Selon un premier mode de réalisation du mélange élastomérique M1 de la première couche de flanc, le module de cisaillement dynamique élastique G'1 du premier mélange élastomérique M1 est avantageusement au moins égal à 0.86 MPa.

Selon un deuxième mode de réalisation du mélange élastomérique M1 de la première couche de flanc, la perte dynamique tgδ1 du premier mélange élastomérique M1 est avantageusement au plus égale à 0.15.

Selon un premier mode de réalisation du mélange élastomérique M2 de la deuxième couche de flanc, le module de cisaillement dynamique élastique G'2 du deuxième élastomérique M2 est avantageusement au moins égal à 0.91 MPa.

Selon un deuxième mode de réalisation du mélange élastomérique M2 de la deuxième couche de flanc, la perte dynamique tgδ2 du deuxième mélange élastomérique M2 est avantageusement au plus égale à 0.210.

Il est à noter que les flancs de pneumatique de type Génie Civil ont une masse représentant environ 15% de la masse totale du pneumatique, donc une masse relative importante, qui a un très fort impact sur la thermique du pneumatique. Il est donc avantageux de diminuer l'hystérèse des flancs, donc les pertes dynamiques des mélanges élastomériques le constituant, afin de diminuer la température de fonctionnement à l'intérieur du pneumatique pour prolonger son endurance et donc sa durée de vie. Ainsi le mélange élastomérique de la première couche de flanc axialement extérieur est préférentiellement conçu pour avoir à une perte dynamique tgδ1 au moins de 55% inférieur à la perte dynamique tgδ2 du mélange élastomérique de la deuxième couche de flanc axialement intérieur. Cependant cette baisse de l'hystérèse doit pouvoir être réalisée sans détériorer les autres propriétés des mélanges élastomériques du flanc, en particulier des propriétés mécaniques telles que la résistance à la fatigue et plus particulièrement la résistance à la fissuration. En effet, les flancs de pneumatique de type Génie Civil sont soumis à de très fortes sollicitations à la fois en terme de déformation en flexion, d'agression, et de thermique.

Dans la zone flanc du pneumatique, les inventeurs ont mis en évidence une corrélation entre les paramètres relatifs à la propagation de fissure tels que le taux de restitution d'énergie et la vitesse de propagation de fissure, et les compositions des mélanges élastomériques. En particulier un lien entre la présence des rotations et l'amélioration des propriétés de résistance à la propagation de fissure a été établi. Les inventeurs émettent l'hypothèse d'une forte dépendance de la propagation des fissures avec, entre autres, le taux de charge de la composition du mélange élastomérique qui doit être supérieur au seuil de percolation de l'élastomère, et avec la densité de ponts de l'élastomère.

Par ailleurs, les sollicitations statiques ou dynamiques prolongées des flancs en présence d'ozone font apparaître des craquelures ou des fissures plus ou moins marquées dont la propagation sous l'effet de la persistance des contraintes peut provoquer une avarie importante du flanc concerné. Il est donc également important que les compositions constituant les flancs de pneumatique pour le Génie civil en particulier, présentent de très bonnes propriétés mécaniques, et donc généralement avec de forte teneur en charge renforçante.

Selon un mode de réalisation préféré, le premier mélange élastomérique M1 est une composition de caoutchouc à base au moins d'un mélange de polyisoprène et de polybutadiène, d'un système de réticulation, d'une charge renforçante comprenant du noir de carbone dont le taux varie de 30 à 40 pce (parties en poids pour cent parties d'élastomère), et dont la surface BET est supérieure ou égale à 110 m²/g qui correspond à celle du noir de carbone N220, conformément à la classification ASTM.

Selon un autre mode de réalisation préféré, le deuxième mélange élastomérique M2 est une composition de caoutchouc à base au moins d'un mélange de polyisoprène et de polybutadiène, d'un système de réticulation, d'une charge renforçante comprenant du noir de carbone N330, caractérisée par une surface BET équivalente à 80 m²/g, dont le taux varie de 40 à 60 pce, tout en restant supérieur au taux de noir du premier mélange élastomérique M1.

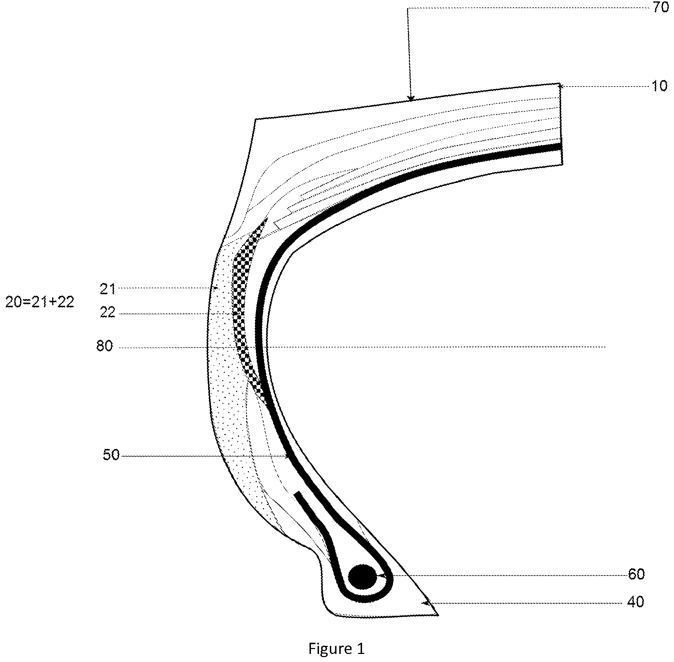

L'architecture d'un flanc de pneumatique selon l'invention sera mieux comprise en référence à la figure 1, non à l'échelle, qui représente une demi-coupe méridienne d'un pneumatique selon l'invention.

La figure 1 représente schématiquement un pneumatique 10 destiné à être utilisé sur des véhicules de type Dumper. Le pneumatique 10 comprend une armature de carcasse radiale 50, ancrée dans deux bourrelets 40 et retournée, dans chaque bourrelet, autour d'une tringle 60. L'armature de carcasse 50 est formée d'une couche de câbles métalliques enrobés dans un mélange élastomérique. Radialement à l'extérieur de l'armature de carcasse 50 est positionnée une armature sommet (non référencée), elle-même radialement intérieure à une bande de roulement 70. Chaque flanc 20 du pneumatique relie la bande de roulement aux bourrelets.

Les épaisseurs E1 et E2 respectivement des première et deuxième couches de flanc 21 et 22, constitutives du flanc 20, sont mesurées suivant la direction normale à l'armature de carcasse 50. Les points de mesure correspondent aux positions déterminées par les intersections de l'axe 80 avec les faces desdites couches de flanc.

Selon l'invention, chaque flanc 20 est un stratifié composé de deux couches de flanc (21, 22) superposées, au moins partiellement, dans le plan méridien. La première couche de flanc 21 la plus axialement extérieure a une épaisseur E1 au plus égale à 0.9 fois l'épaisseur totale E du stratifié. La deuxième couche de flanc 22 axialement intérieure a une épaisseur E2 égale à la valeur minimale entre 3 mm et 0.1 fois l'épaisseur totale E du stratifié. La deuxième couche de flanc 22 axialement intérieure est en contact avec le mélange élastomérique d'enrobage de l'armature carcasse, typiquement sur au moins 10 mm. La superposition des deux couches de flanc s'étale de part et d'autre de l'axe 80 passant le point le plus axialement extérieur du flanc et parallèle à l'axe du pneumatique.

L'invention a été plus particulièrement étudiée sur un pneumatique de dimension 29 R25, par comparaison entre deux versions A et B de pneumatique. Le pneumatique A, pneumatique de référence, comprend un flanc constitué par une seule couche de flanc. Le pneumatique B, selon un mode de réalisation de l'invention, comprend un flanc constitué de deux couches de flanc.

Le flanc du pneumatique A est constitué par un mélange élastomérique M0 qui est considéré le matériau de référence. Ce mélange élastomérique M0 de référence de l'unique couche de flanc du pneumatique A est identique au deuxième mélange élastomérique M2 de la deuxième couche de flanc du pneumatique B.

Le tableau 1 ci-dessous donne un exemple de compositions chimiques des premier et deuxième mélanges élastomériques M1 et M2 respectivement constitutifs des première et deuxième couches de flanc d'un pneumatique B selon l'invention :

**Tableau 1**

| Composition | Premier mélange élastomérique M1 de première couche de flanc | Deuxième mélange élastomérique M2 de deuxième couche de flanc |
|---|---|---|
| NR (Natural Rubber) | 50 | 50 |
| BR (Butadien Rubber) | 50 | 50 |
| Noir de carbone N330 | 0 | 55 |
| Noir de carbone N220 | 38 | 0 |
| Plastifiant | 10 | 18 |
| Cire | 1 | 1 |
| Antioxydant | 3 | 3 |
| ZnO | 2.5 | 2.5 |
| Acide stéarique | 1 | 1 |
| Soufre | 1 | 0.9 |
| Accélérateur | 0.8 | 0.6 |

Le premier mélange élastomérique M1 de la première couche de flanc radialement extérieure diffère du deuxième mélange élastomérique M2 (référence) de la deuxième couche de flanc radialement intérieure par :
- La finesse de sa charge, caractérisée par la surface BET définie dans la norme ASTM D1765 : Le premier mélange élastomérique M1 est chargé par du noir de carbone N220 plus fin que le noir de carbone N330 du deuxième mélange élastomérique M2 ;
- Le taux de charge, exprimé en pce (pour cent d'élastomère) : Le premier mélange élastomérique M1 a un taux de charge, égal à 38, inférieur au taux de charge du deuxième mélange élastomérique M2, égal à 55, pris en référence ;
- Le taux de plastifiant qui va pratiquement du simple au double entre respectivement les premier et deuxième mélanges élastomériques M1 et M2.

Les premier et deuxième mélanges élastomériques M1 et M2 ont été caractérisés mécaniquement, conformément aux méthodes décrites en préambule. Le tableau 2 ci-dessous présente les caractéristiques mécaniques ainsi déterminées :

**Tableau 2**

| Caractéristiques mécaniques | Premier mélange élastomérique M1 de première couche de flanc | Deuxième mélange élastomérique M2 de deuxième couche de flanc |
|---|---|---|
| Allongement à rupture (60°C) | 762% | 780% |
| Contrainte à rupture (60°C) | 11.9 MPa | 12.1 Mpa |
| Nombre de cycles à rupture en fatigue NR (23°C) | 150000 cycles | 300000 cycles |
| Vitesse de fissuration VP (60°C, 900J/m²)⁽¹⁾ | 20 nm/cycles | 9 nm/cycles |
| Module de cisaillement élastique G' (50%, 60°C et 10Hz) ⁽²⁾ | 0.86 MPa | 0.91 MPa |
| Module de cisaillement visqueux G" (50%, 60°C et 10Hz) ⁽²⁾ | 0.165 MPa | 0.300 MPa |
| Perte dynamique tgδ (50%, 60°C et 10Hz) ⁽²⁾ | 0.150 | 0.210 |

| | | |
|---|---|---|
| 1) Les vitesses de propagation de la fissure sont mesurées avec une précision de ± 5 nm par cycle ; 2) Les caractéristiques mécaniques G', G", et tgδ sont mesurées sur la courbe retour à la déformation de 50% pour la grandeur G*, alors que pour G", et tgδ, ce sont les valeurs les plus élevées obtenues sur l'ensemble du cycle retour. | | |

Dans un essai de traction dynamique tel que décrit dans le préambule de la description, sur une éprouvette pré-entaillée, la fissure dans le premier mélange élastomérique M1 se propage à une vitesse de propagation environ deux fois supérieure à celle observée dans le deuxième mélange élastomérique M2. A contrario, dans le deuxième mélange élastomérique M2, l'apparition de rotations de la fissure ralentit la progression de la fissure. Comme décrit précédemment, ces propriétés sont recherchées pour favoriser la propagation de la fissure dans la première couche de flanc axialement extérieure sans laisser de traces apparentes à l'extérieur du pneumatique. La propagation se poursuit dans la deuxième couche de flanc axialement intérieure sans toutefois provoquer la mise à plat du pneumatique suite à une perte d'étanchéité.

Les inventeurs ont déterminé expérimentalement que, dans la zone de flanc du pneumatique, un taux de restitution d'énergie à 900 J/m² est représentatif de l'énergie à fournir pour observer l'évolution de la fissure. Pour cette valeur de taux de restitution d'énergie, on observe, sur un pneumatique après roulage, le même mécanisme de fissuration que celui observé sur échantillon de test.

Le calcul du champ de température par la méthode des éléments finis montre un environnement thermique plus favorable pour le pneumatique selon l'invention. La température moyenne dans le flanc du pneumatique A de référence est de 80°C, alors que, pour le pneumatique B selon l'invention, la température moyenne dans le flanc s'élève seulement à 70°C.

Les inventeurs ont par ailleurs réalisés des tests d'endurance sur les pneumatiques A et B. Ces tests sont similaires à ceux requis, par exemple, par le règlement Européen UNECE/R54 pour l'endurance, mais adaptés pour les pneumatiques pour véhicule de génie civil. Selon ce test, le pneumatique B selon l'invention a une durée de vie allongée de 30% par rapport à la référence.

Sur ces mêmes tests, les fissures analysées après la fin du roulage des pneumatiques, confirment les directions de propagation des fissures : amorce et propagation dans la première couche de flanc axialement extérieure, axialement vers l'intérieur du pneumatique, puis rotation après pénétration dans la deuxième couche de flanc axialement intérieure évitant ainsi la mise à plat du pneumatique.

## Revendications

1. Pneumatique (10) pour véhicule lourd de type génie civil comprenant :
- deux flancs (20) reliant une bande de roulement (30) à deux bourrelets (40),
- chaque flanc (20) consistant en un stratifié comprenant au moins une première et une deuxième couches (21,22) axialement superposées et ayant une épaisseur totale E,
- la première couche de flanc (21), la plus axialement extérieure, ayant une épaisseur E1 et étant constituée d'un premier mélange élastomérique M1,
- le premier mélange élastomérique M1 ayant un module de cisaillement dynamique élastique G'1, un module de cisaillement visqueux G"1, une perte dynamique tgδ1, une résistance à la fissuration en fatigue **caractérisée par** un nombre de cycles à rupture NR1et une aptitude à la propagation de fissure **caractérisée par** une vitesse de propagation de fissure VP1,
- la deuxième couche de flanc (22), la plus axialement intérieure, ayant une épaisseur E2 et étant constituée d'un deuxième mélange élastomérique M2,
- le deuxième mélange élastomérique M2 ayant un module de cisaillement dynamique élastique G'2, un module de cisaillement visqueux G"2, une perte dynamique tgδ2, une résistance à la fissuration en fatigue **caractérisée par** un nombre de cycles à rupture NR2 et une aptitude à la propagation de fissure **caractérisée par** une vitesse de propagation de fissure VP2,
les propriétés dynamiques étant mesurées à une fréquence de 10 Hz et à une température de 60°C selon la norme ASTM D 5992-96, et
les tests de fissuration étant effectués à une température de 80°C,
**caractérisé en ce que** l'épaisseur E1 de la première couche de flanc (21) axialement extérieure est au plus égale à 0.9 fois l'épaisseur totale E du stratifié, **en ce que** l'épaisseur E2 de la deuxième couche de flanc (22) axialement intérieure est au moins égale à la valeur minimale entre 3 mm et 0.1 fois l'épaisseur totale E du stratifié, **en ce que** le premier mélange élastomérique M1 a un nombre de cycles à rupture NR1 au moins égal à 150000 cycles, **en ce que** le deuxième mélange élastomérique M2 a un nombre de cycles à rupture NR2 au moins égal à 300000 cycles **et en ce que** le rapport VP1/ VP2 des vitesses de propagation des fissures respectivement dans les premier et deuxième mélanges élastomériques (M1, M2) est au moins égal à 1.25.

2. Pneumatique selon la revendication 1 **dans lequel** les modules de cisaillement dynamiques élastiques (G'1, G'2) des premier et deuxième mélanges élastomériques (M1, M2) sont sensiblement égaux.

3. Pneumatique selon l'une des revendications 1 ou 2 **dans lequel** le rapport des modules de cisaillement visqueux G"1/G"2 respectivement des mélanges (M1, M2) est au plus égal à 0.55.

4. Pneumatique selon l'une quelconque des revendications 1 à 3 **dans lequel** le module de cisaillement dynamique élastique G'1 du premier mélange élastomérique M1 est au moins égal à 0.86 MPa.

5. Pneumatique selon l'une quelconque des revendications 1 à 4 **dans lequel** la perte dynamique tgδ1 du premier mélange élastomérique M1 est au plus égale à 0.15.

6. Pneumatique selon l'une quelconque des revendications 1 à 5 **dans lequel** le module de cisaillement dynamique élastique G'2 du deuxième élastomérique M2 est au moins égal à 0.91 MPa.

7. Pneumatique selon l'une quelconque des revendications 1 à 6 **dans lequel** la perte dynamique tgδ2 du deuxième mélange élastomérique M2 est au plus égale à 0.210.

8. Pneumatique selon l'une quelconque des revendications 1 à 7 **dans lequel** le premier mélange élastomérique M1 est une composition de caoutchouc à base au moins d'un mélange de polyisoprène et de polybutadiène, d'un système de réticulation, d'une charge renforçante comprenant du noir de carbone dont le taux varie de 30 à 40 pce (parties en poids pour cent parties d'élastomère), et dont la surface BET est supérieure ou égale à 110 m²/g qui correspond à celle du noir de carbone N220.

9. Pneumatique selon la revendication 8 **dans lequel** le deuxième mélange élastomérique M2 est une composition de caoutchouc à base au moins d'un mélange de polyisoprène et de polybutadiène, d'un système de réticulation, d'une charge renforçante comprenant du noir de carbone N330, **caractérisée par** une surface BET équivalente à 80 m²/g, dont le taux varie de 40 à 60 pce, tout en restant supérieur au taux de noir du premier mélange élastomérique M1.

## Patentansprüche

1. Reifen (10) für ein ziviles Schwerlastfahrzeug, umfassend:
- zwei Seitenwände (20), die einen Laufstreifen (30) mit zwei Wülsten (40) verbinden,
- wobei jede Seitenwand (20) aus einem Schichtstoff besteht, der mindestens eine erste und eine zweite Schicht (21, 22) umfasst, die axial übereinander gelagert sind und eine Gesamtdicke E aufweisen,
- wobei die erste Seitenwandschicht (21), die sich axial am weitesten außen befindet, eine Dicke E1 aufweist und von einer ersten Elastomermischung M1 gebildet ist,
- wobei die erste Elastomermischung M1 einen elastischen dynamischen Schermodul G'1, einen viskosen Schermodul G"1, einen dynamischen Verlust tgδ1, eine Beständigkeit gegen Rissbildung bei Ermüdung, die durch eine Anzahl von Zyklen bei Bruch NR1 gekennzeichnet ist, und eine Rissausbreitungsfähigkeit, die durch eine Rissausbreitungsgeschwindigkeit VP1 gekennzeichnet ist, aufweist,
- wobei die zweite Seitenwandschicht (22), die sich axial am weitesten innen befindet, eine Dicke E2 aufweist und von einer zweiten Elastomermischung M2 gebildet ist,
- wobei die zweite Elastomermischung M2 einen elastischen dynamischen Schermodul G'2, einen viskosen Schermodul G"2, einen dynamischen Verlust tgδ2, eine Beständigkeit gegen Rissbildung bei Ermüdung, die durch eine Anzahl von Zyklen bei Bruch NR2 gekennzeichnet ist, und eine Rissausbreitungsfähigkeit, die durch eine Rissausbreitungsgeschwindigkeit VP2 gekennzeichnet ist, aufweist, wobei die dynamischen Eigenschaften bei einer Frequenz von 10 Hz und einer Temperatur von 60 °C gemäß der Norm ASTM D 5992-96 gemessen werden und die Rissbildungsprüfungen bei einer Temperatur von 80 °C durchgeführt werden,
**dadurch gekennzeichnet, dass** die Dicke E1 der ersten, axial äußeren Seitenwandschicht (21) höchstens gleich dem 0,9-Fachen der Gesamtdicke E des Schichtstoffs ist, dadurch, dass die Dicke E2 der zweiten, axial inneren Seitenwandschicht (22) mindestens gleich dem Minimalwert zwischen 3 mm und dem 0,1-Fachen der Gesamtdicke E des Schichtstoffs ist, dadurch, dass die erste Elastomermischung M1 eine Anzahl von Zyklen bei Bruch NR1 aufweist, die mindestens gleich 150000 Zyklen ist, dadurch, dass die zweite Elastomermischung M2 eine Anzahl von Zyklen bei Bruch NR2 aufweist, die mindestens gleich 300000 Zyklen ist, und dadurch, dass das Verhältnis VP1/VP2 der Rissausbreitungsgeschwindigkeiten in der ersten bzw. zweiten Elastomermischung (M1, M2) mindestens gleich 1,25 ist.

2. Reifen nach Anspruch 1, wobei die elastischen dynamischen Schermodule (G'1, G'2) der ersten und zweiten Elastomermischung (M1, M2) im Wesentlichen gleich sind.

3. Reifen nach einem der Ansprüche 1 oder 2, wobei das Verhältnis der viskosen Schermodule G"1/G"2 der jeweiligen Mischungen (M1, M2) höchstens gleich 0,55 ist.

4. Reifen nach einem der Ansprüche 1 bis 3, wobei der elastische dynamische Schermodul G'1 der ersten Elastomermischung M1 mindestens gleich 0,86 MPa ist.

5. Reifen nach einem der Ansprüche 1 bis 4, wobei der dynamische Verlust tgδ1 der ersten Elastomermischung M1 höchstens gleich 0,15 ist.

6. Reifen nach einem der Ansprüche 1 bis 5, wobei der elastische dynamische Schermodul G'2 der zweiten Elastomermischung M2 mindestens gleich 0,91 MPa ist.

7. Reifen nach einem der Ansprüche 1 bis 6, wobei der dynamische Verlust tgδ2 der zweiten Elastomermischung M2 höchstens gleich 0,210 ist.

8. Reifen nach einem der Ansprüche 1 bis 7, wobei die erste Elastomermischung M1 eine Gummizusammensetzung auf Grundlage von mindestens einem Gemisch aus Polyisopren und Polybutadien, einem Vernetzungssystem, einem Verstärkungsfüllstoff umfassend Ruß ist, dessen Anteil von 30 bis 40 pce (Gewichtsanteil pro hundert Anteile Elastomer) variiert, und dessen BET-Oberfläche größer als oder gleich 110 m²/g ist, die jener des Rußes N220 entspricht.

9. Reifen nach Anspruch 8, wobei die zweite Elastomermischung M2 eine Gummizusammensetzung auf Grundlage von mindestens einem Gemisch aus Polyisopren und Polybutadien, einem Vernetzungssystem, einem Verstärkungsfüllstoff umfassend Ruß N330 ist, der durch eine BET-Oberfläche gekennzeichnet ist, die mit 80 m²/g äquivalent ist, dessen Anteil von 40 bis 60 pce variiert, wobei er über dem Rußanteil der ersten Elastomermischung M1 bleibt.

## Claims

1. Tyre (10) for a heavy vehicle of construction plant type, comprising:
- two sidewalls (20) connecting a tread (30) to two beads (40),
- each sidewall (20) consisting of a laminate comprising at least first and second layers (21, 22) that are axially superposed and have a total thickness E,
- the axially outermost first sidewall layer (21) having a thickness E1 and consisting of a elastomeric compound M1,
- the first elastomeric compound M1 having an elastic dynamic shear modulus G'1, a viscous shear modulus G"1, a dynamic loss tgδ1, a fatigue crack resistance **characterized by** a number of cycles to failure NR1 and a crack propagation tendency **characterized by** a crack propagation rate VP1,
- the axially innermost second sidewall layer (22) having a thickness E2 and consisting of a second elastomeric compound M2,
- the second elastomeric compound M2 having an elastic dynamic shear modulus G'2, a viscous shear modulus G"2, a dynamic loss tgδ2, a fatigue crack resistance **characterized by** a number of cycles to failure NR2 and a crack propagation tendency **characterized by** a crack propagation rate VP2,
**characterized in that** the thickness E1 of the axially outside first sidewall layer (21) is at most equal to 0.9 times the total thickness E of the laminate, **in that** the thickness E2 of the axially inside second sidewall layer (22) is at least equal to the minimum value between 3 mm and 0.1 times the total thickness E of the laminate, **in that** the first elastomeric compound M1 has a number of cycles to failure NR1 at least equal to 150 000 cycles, **in that** the second elastomeric compound M2 has a number of cycles to failure NR2 at least equal to 300 000 cycles **and in that** the VP1/ VP2 ratio of the crack propagation rates respectively in the first and second elastomeric compounds (M1, M2) is at least equal to 1.25.

2. Tyre according to Claim 1 **wherein** the elastic dynamic shear moduli (G'1, G'2) of the first and second elastomeric compounds (M1, M2) are substantially equal.

3. Tyre according to either of Claims 1 and 2 **wherein** the ratio of the viscous shear moduli G"1/G"2 respectively of the compounds (M1, M2) is at most equal to 0.55.

4. Tyre according to any one of Claims 1 to 3 **wherein** the elastic dynamic shear modulus G1 of the first elastomeric compound M1 is at least equal to 0.86 MPa.

5. Tyre according to any one of Claims 1 to 4 **wherein** the dynamic loss tgδ1 of the first elastomeric compound M1 is at most equal to 0.15.

6. Tyre according to any one of Claims 1 to 5 **wherein** the elastic dynamic shear modulus G'2 of the second elastomeric M2 is at least equal to 0.91 MPa.

7. Tyre according to any one of Claims 1 to 6 **wherein** the dynamic loss tg82 of the second elastomeric compound M2 is at most equal to 0.210.

8. Tyre according to any one of Claims 1 to 7 **wherein** the first elastomeric compound M1 is a rubber composition based at least on a mixture of polyisoprene and polybutadiene, a crosslinking system, a reinforcing filler comprising carbon black, the content of which varies from 30 to 40 phr (parts by weight per hundred parts of elastomer), and the BET surface area of which is greater than or equal to 110 m²/g which corresponds to that of the carbon black N220.

9. Tyre according to Claim 8 **wherein** the second elastomeric compound M2 is a rubber composition based at least on a mixture of polyisoprene and polybutadiene, a crosslinking system, a reinforcing filler comprising carbon black N330, **characterized by** a BET surface area equivalent to 80 m²/g, the content of which varies from 40 to 60 phr, while remaining greater than the black content of the first elastomeric compound M1.
